# EUROPEAN PATENT APPLICATION

(11) **EP 1 311 092 A1**
(43) Date of publication of application: **14.05.2003**
(21) Application number: 01440379.4
(22) Date of filing: 12.11.2001
(51) Int. Cl.: H04L 12/56, H04L 12/46

(54) **Method and modules for setting up a tunnel connection**

(71) Applicant: ALCATEL, 75008 Paris (FR)
(72) Inventor: De Cnodder, Stefaan, 2275 Lille (BE); Soetens, Timothy, 3140 Keerbergen (BE)
(74) Representative: Rausch, Gabriele, Dr.

(57) **Abstract**

The present invention relates to a method for setting up a tunnel connection (TU1; TU2; TU3) between a first and a second communication device (R11, R21; R21, T31; R12, R13) both being connected via a communication network (INW, NW1), being a routed network able to reserve a Quality of Service for said tunnel (TU1; TU2; TU3). The tunnel (TU1; TU2; TU3) is intended to carry an aggregate of data flows, the method comprising the steps of:
- Transmission of a first signaling message (S1'; S10; S13) of a resource reservation protocol by said first to said second communication device (R21; T31; R13) via the communication network (INW, NW1), said first signaling message (S1'; S10; S13) containing an address information of said first communication device (R11; R21; R12) and a request for a tunnel connection (TU1; TU2; TU3). The request identifies the first communication device as a probable source point of said tunnel (TU1; TU2; TU3).
- Sending by said second communication device (R21; T31; R13) a second signaling message (S3; S11; S13) using said resource reservation protocol to said first communication device (R11; R21; R12), said second signaling message (S3; S11; S13) containing a response to said request for a tunnel connection (TU1; TU2; TU3) and further containing an address information of said second communication device (R21; T31; R13), said response identifying said second communication device as a probable destination point of said tunnel (TU1; TU2; TU3).

## Description

### Background of the Invention

The present invention relates to a method for setting up a tunnel connection between a first and a second communication device both being connected via at least one first communication network, said at least one first communication network being a routed network able to reserve a Quality of Service for said tunnel. The tunnel is intended carry an aggregate of data flows. The invention furthermore relates to a first and a second communication device therefor, a first program module for a first communication device therefor and a second program module for a second communication device therefor.

The current Internet architecture offers a point to point delivery service and transmits data in a best effort delivery model. The highest guarantee the network provides is reliable data delivery using protocols like TCP (Transmission Control Protocol) etc.. For traditional data applications, where correct data delivery is more important than timeliness, like FTP (File Transfer Protocol) and Telnet, this best effort delivery may be adequate.

For applications which are sensitive to the quality of service, for example real time transmission like video teleconferencing, this traditional best effort delivery is not sufficient. A network providing a requested quality-of-service (QoS) is, e.g., the so-called Integrated Services (Intserv) Internet which can provide both best-effort and real-time service. In an Intserv network resources may be reserved to provide a predefined QoS for example by means of the Resource ReSerVation Protocol (RSVP) as defined by the Internet Engineering Task Force (IETF).

RSVP is a receiver-oriented protocol. Each receiver is responsible for choosing its own level of reserved resources, initiating the reservation and keeping it active as long as it wants to. The receiver, e.g., a receiving host or a router, requests specific qualities of service from the network for particular application data streams or flows. RSVP requests will generally result in resources being reserved in each node along the data path.

The network provides a QoS guarantee on a per-packet flow basis. This, however, creates scalability problems, e.g., on backbone routers, if numerous individual packet flows have to be handled. To solve this problem, several flows may be aggregated into a tunnel or a pipe.

It is however difficult to establish such a tunnel. A tunnel may be manually configured, e.g., by a network operator. Another possibility is, that network devices, e.g., routers, that want to establish a tunnel communicate via so-called scout packets in order to identify each other. If the sender of such a scout packet does not receive an answer thereto in a predefined time, it has subsequently to establish a conventional data flow. This causes considerable time delay. In this context it has to be noted, that the scout packets are IP-packets (Internet Protocol) that are transmitted using the best effort model. Furthermore, the potential tunnel partner may be not or temporarily not "tunnel-enabled".

### Summary of the Invention:

Accordingly one object of the invention is to provide a method and means capable of dynamically setting up a tunnel connection.

This object is to be attained by a method in accordance with the technical principle of claim 1, a first communication device therefor and a second communication device therefor, a first program module for a first communication device therefor and a second program module for a second communication device therefor, said devices and program modules being in accordance with technical principles of further independent claims.

In this respect one principle of the invention is that a first communication device that is able to serve as a possible tunnel source point identifies a second communication device being a possible tunnel destination point by signaling messages of a resource reservation protocol, when a tunnel connection able to carry an aggregate of data flows via at least one routed communication network, e.g., the Internet, has to be established. The resource reservation protocol is preferably the resource reservation protocol (RSVP) defined by the IETF. The first and the second communication device may be, e.g., router or hosts. In any case, the messages sent to identify the tunnel end-points are on the same protocol level as other messages needed to request connections with a predefined quality of service (QoS) via the routed communication network. Therefore, the reliable signaling communication of the resource reservation protocol is used.

Advantageous further effects of the invention will be seen from the dependent claims and the specification.

The same functional elements of the first communication device and of the second communication device can serve to both: to establish 'conventional' data flows via the communication network by means of the resource reservation protocol and to identify tunnel 'partners' according to the invention and to establish the tunnel connection.

Preferably the first and/or the second communication device may establish the tunnel connection using the communicated address information. For example the second communication device can establish the tunnel connection using the address information of the first signaling message. It is however possible, that subsequent to the inventive signaling messages further signaling messages - of the resource reservation protocol or other protocols - are sent to establish the tunnel.

Once the tunnel is established, the first communication device preferably serves as an aggreator aggregating several data flows into the tunnel and the second communication device as a deaggregator deaggregating these data flows.

The invention is applicable to both inter-domain tunnel connections and intra-domain tunnel connections.

The first communication device may be both a host or a router serving a first host or group of hosts. The second communication device may be also be both a host or a router serving a second host or group of hosts.

The first communication device may be a router serving a first domain and/or the second communication device may be a router serving second domain. The first and/or the second domains may be established, e.g., on the at least one first communication network or first and a second access network being connected to the at least one first communication network. It may also be established on a network common to both the first and the second communication device and being connected to the at least one first communication network.

The at least one first communication network provides preferably integrated services.

The invention may be preferably carried out based on internet protocol (IP) networks. The first and second signaling messages may be RSVP messages sent on top of IPv4 or IPv6 (internet protocol version 4 and 6 respectively) and occupying the place of a transport protocol in the protocol stack. Various types networks can provide underlying (physical and/or logical) layers for the internet protocol messages, e.g., a MPLS, a SDH or a SONET network (MPLS = Multiprotocol Label Switching, SDH = Synchronous Digital Hierarchy, SONET = Synchronous Optical NETwork).

The inventive first and second signaling messages may also be sent via an already existing tunnel between the first and the second communication device. In a preferred embodiment of the invention the first signaling message is forwarded by intermediate routers of the at least one routed communication network, whereby the intermediate routers or other intermediate communication devices of the at least one routed network ignore the request for a tunnel connection. Thus, the first signaling message is not intercepted and/or modified by communication devices of the at least one routed communication network.

The resource reservation protocol may be slightly amended, whereby, e.g., the first and/or the second signaling message are new defined messages. New identifiers for the new messages may be defined. In a preferred embodiment of the invention, a new tunnel-request-object containing an address information of the first communication device and/or a new response-to-tunnel-request-object containing an address information of the second communication device are defined. Both new objects may be inserted ("piggy-backed") into conventional signaling messages of the resource reservation protocol. It is evident that various combinations are possible, e.g., a first signaling message containing the new tunnel-request-object may be answered by the a second signaling message being a new defined message.

The first signaling message, the downstream message, is preferably a PATH-Message of the resource reservation protocol. For the upstream signaling via the second signaling message a RESV-message or a PATHerror-message or a RESVtear-message of the resource reservation protocol may expediently be used.

A suitable embodiment of the invention provides, that the identification of the tunnel end and source point is carried out in connection with establishing a connection for a data flow through the at least one routed communication network. In such a scenario the first communication device is, e.g., a router serving a first host and receiving a request for a connection from this first host to a second host, the second host being or being served by the second communication device. It is however possible, that the identification is made without an actual need but in view of a future need for a tunnel connection.

The first signaling message and/or the second signaling message may be used to establish a 'conventional' connection for a data flow. The conventional connection is a connection separate from the probable tunnel to be established by means of the first and/or the second signaling message. 'conventional' connection means, that the connection is established by the resource reservation protocol as known in the art. Thus, the data flow may be transmitted through the at least one routed communication network via the 'conventional' connection. Once the tunnel is established, the data flow is mapped on the tunnel connection and the conventional connection is released. The aforementioned method is especially of advantage, if the first communication device does not succeed in identifying the second communication device as a possible tunnel end point. In this case no tunnel connection is established according to the invention. The data flow can be immediately transmitted via the conventional connection and no time is lost for the unsuccessful identification of a possible tunnel end-point. Once a tunnel is established a data flow can be mapped on the tunnel and the former connection being separate from the tunnel may be released.

In this context it has to be noted, that the first and the second signaling can establish a conventional connection separate from the tunnel even if the conventional connection is not really used, e.g., because for the transmission of a data flow not the conventional connection but instead the tunnel is immediately used. In such a scenario, the first and the second signaling may be, e.g., a PATH and a RESV message respectively being 'bearer' messages for the identification of the possible tunnel end points.

In any case is preferred that the conventional connection separate from the tunnel is actively released, in particular by a release signaling communication of said resource reservation protocol. For example the first communication device and/or the second communication device can send release signaling messages, e.g., a PATHtear-message or a RESVtear-message respectively. However, the first and/or the second communication device may also fail to sent refresh messages to the devices along the path of the conventional connection thereby so to say passively releasing the conventional connection. After a cleanup timeout period the path for the conventional connection is released by the devices along the path.

The following description will serve to explain the advantages of the invention on the basis of working examples as illustrated in the accompanying drawings.

### Brief Description of the Drawings:

- Figure 1: shows an arrangement for the performance of the method in accordance with the invention using networks NW1 - NW3 connected to an intermediate network INW.
- Figure 2: shows a functional view of a terminal TERX and a router ROUX, both in accordance with the invention.
- Figure 3: shows a block diagram for a communication device CD that may be both the terminal TERX and the router ROUX according to figure 2.

### Detailed Description of the Invention:

Reference will now be made in detail to the present preferred embodiments of the invention as illustrated in the accompanying drawings. In describing the preferred embodiments and applications of the present invention, specific terminology is employed for the sake of clarity. However, the invention is not intended to be limited to the specific terminology so selected, and it is understood that each specific element includes all technical equivalents which operate in a similar manner to accomplish a similar purpose.

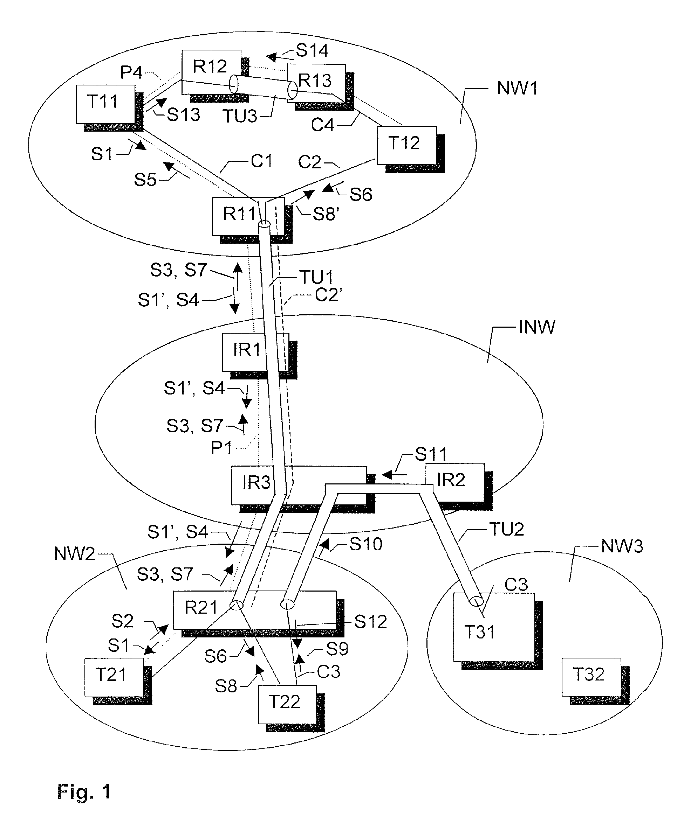

Figure 1 shows a very diagrammatically presented arrangement by way of example, with which the invention may be put into practice. Networks NW1 - NW3 are interconnected by an intermediate network INW. The networks NW1 - NW3; INW are routed networks and support basically the resource reservation protocol (RESV) according to the definitions of the IETF. However, it is not necessary, that all devices of the networks NW1 - NW3; INW support the RESV protocol. The networks NW1 - NW3; INW may be logical networks based on a common physical network or at least partially physically separate networks. The networks NW1 - NW3 may be, e.g., LAN (local area networks) or access networks, the intermediate network INW may be the INTERNET. Via the intermediate network INW tunnel connections with an assured Quality of Service (QoS) can be established.

The networks NW1 - NW3; INW contain, by way of example, several communication devices: the network NW1 contains terminals T11, T12 and router R11 - R13, the network NW2 contains terminals T21, T22 and a router R21, the network NW3 contains terminals T31, T32. The intermediate network INW contains routers IR1 - IR3. The networks NW1 - NW3; INW may contain further (not shown) communication devices, e.g., switches, hubs or the like.

The terminals T11 - T32 are hosts that are sending and receiving packets. The routers R11 - R13, R21; IR1 - IR3 are apparatuses that not only send and receive packets but also transfer packets from one logical network to another logical network. In the following a "node" indicates either a host or a router, which can process packets at the network layer.

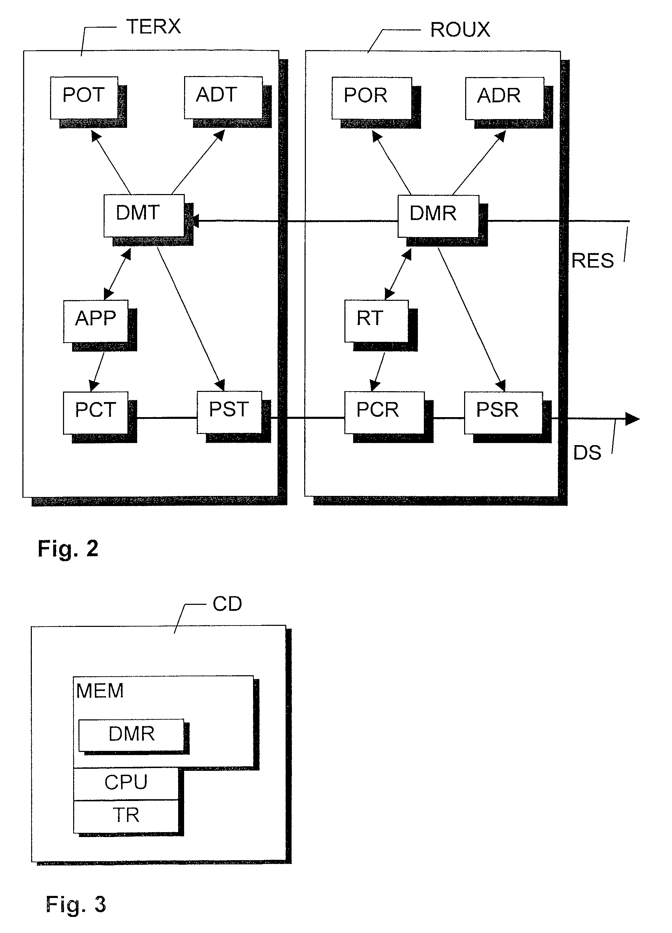

In the present embodiment each router R11 - R13, R21; IR1 - IR3 and also the terminals T11 - T32 are capable of resource reservation using the RSVP protocol. It has however be noted, that not all communication devices R11 - R13, R21; IR1 - IR3; T11 - T32 have necessarily to be RSVP capable. The invention may also be carried out by communication devices that are not RSVP capable in connection with communication devices that are RSVP capable. Figure 2 shows a terminal TERX and a router ROUX, e.g. the terminal T11 and the router R11 respectively, in a functional view as examples for RSVP routers and hosts respectively, that are modified in accordance with the invention. In Figure 2 DS is the data flow, and RES the RSVP reservation communication.

The basic traffic functions needed for reservation setup and enforcement are known and defined, e.g. in the RFC 2205 of the IETF. These functions are presently modified in accordance with the invention at least at some the nodes R11 - R13, R21; IR1 - IR3, T11 - T32, which will be explained later.

The traffic functions, e.g., comprise packet classifiers PCT, PCR, packet schedulers PST, PSR and admission control functions ADT, ADR. The traffic functions may be controlled by RSVP daemons DMT, DMR or any other "RSVP (main) process". The RSVP daemons DMT, DMR check, e.g., with policy control functions POT, POR whether a user has administrative permission to make the reservation. Further, the respective RSVP daemon DMT, DMR checks with the respective admission control ADT, ADR whether the node has sufficient available resources to supply the requested QoS. The admission control functions ADT, ADR keep track of the respective node's system resources If both checks succeed, parameters are set in the packet classifiers PCT, PCR and in the packet schedulers PST, PSR (or any other link layer interface) to obtain the desired QoS. If either check fails, the respective RSVP daemon DMT, DMR returns an error notification to an application process APP that originated the request. The packet classifier PCT, PCR determine the QoS class for each packet and the packet scheduler PST, PSR orders packet transmission to achieve the promised QoS for each stream.

RSVP daemon DMR also communicates with a routing process RT to determine the path to send its reservation requests and to handle changing memberships and routes.

In order to perform a resource reservation at the routers R11 - R13, IR1-IR3, R21, resource reservation information is exchanged between nodes R11 - R13, IR1-IR3, R21, T11 - T32 using the RSVP (Resource reservation Protocol). The resource reservation is performed from a destination node to a source node, e.g, from terminal T11 to terminal T21. To this end, a PATH message is sent from node to node along a path in a direction flowing from the source node to the destination node, e.g., from terminal T11 to terminal T21 via the routers R11, IR1, IR3 and R21 along a path P1.

The routers R11, IR1, IR3 and R21 along path P1 store information regarding the path on which the data is to be transferred based on the PATH message. This PATH message contains an identifier specifying the packet flow for which the resource reservation is to be performed and an IP address of the node that has sent the PATH message. Basically, the invention can follow this concept, which will be explained in the following in detail.

In first example a connection C1 between the terminals T11 and T21 shall be established. The connection C1 shall be used to send a data flow from terminal T11 to terminal T21 and shall have an assured QoS, i.e., a guaranteed minimum of bandwidth, delay, jitter, etc.. To this end the terminal T11, e.g., the above daemon DMT run by the terminal T11, sends a first signaling message S1 of the resource reservation protocol, e.g., a PATH message, to the router R11. The PATH message S1 contains all information necessary to identify a path P1 for the connection C1, i.e., the address of terminal T21, and the so-called flow spec to describe sender template (data format, source address, source port) and traffic characteristics. This information may be used by the receiving terminal T21 to find the reverse path to the sending terminal T11 and to determine what resources should be reserved.

The terminal T11 sends the message S1 to the router R11 in order establish the first hop of the path P1. The router R11 is responsible for connecting the network NW1 with other logical and/or physical networks, i.e., with the intermediate network INW.

The router R11 intends to establish a tunnel connection to the network NW2 via the intermediate network INW, in order to aggregate several data flows into the tunnel. The problem is, that the router R11 does not know whether there is a possible tunnel end point at the network NW2 available. Thus, in a first embodiment of the invention, the router R11, e.g., the daemon DMR, inserts additional information into the signaling message S1: a request for a tunnel connection containing information about its address, i.e., its IP address (IP = internet protocol). The request for a tunnel connection is presently a tunnel-request-object. Intermediate communication devices along the path to the terminal T21, i.e., intermediate routers, that do not support the tunnel-request-object, shall forward the signaling message S1' containing the tunnel-request-object transparently to the next hop along the path. To this end, the object has an object number, e.g., larger than 192. The object number may be proprietary defined or be subject to a standard.

The router R11 forwards the signaling message S1' to the network INW, i.e., to the router IR1, that is presently an edge core router of network INW. Via the router IR1 traffic of network NW1 enters network INW. The signaling message S1' is forwarded from the router IR1 through the network INW to the router IR3 via the path P1. The routers IR1, IR3 may be directly connected or, more likely, further communication devices (not shown), e.g., switches, routers or the like, may be along the path P1 through the network INW.

The router IR3 is an edge core router of network INW responsible for traffic from network NW2 and for traffic to network NW2. The router IR3 forwards the signaling message S1' to network NW2, i.e. to the router R21 that handles traffic to network NW2 and traffic from network NW2. Thus, the router IR3 forwards the signaling message S1' to the router R21. The router R21 identifies the tunnel-request-object in the signaling message S1' and removes it therefrom, thereby restoring the original signaling message S1. Finally, the router R21 forwards the message S1 to terminal T21. It has to be noted, that the expression "original signaling message S1" is used for simplification. The messages S1, S1' may be continuously modified by the hop nodes R11, IR1, IR2 and R21 along the path from T11 to T21, e.g., their respective IP addresses may be inserted into the message S1, S1'.

In typical RSVP, when the destination terminal T21 receives the signaling message S1, the PATH message, it makes its request for resource reservation by sending an RESV message upstream, back to the source terminal T11 in response to the PATH message. This RESV message contains a quality of service (QoS) requested by the destination terminal T21 and an identifier, e.g., a so-called Flow ID, specifying the packet flow for which resources are to be reserved.

After receiving the RESV message each router R21, IR3, IR1, R11 determines whether its network-layer (e.g., Internet Protocol (IP)) processing section has sufficient capacity for this resource reservation. If so, the respective router R21, IR3, IR1, R11 performs network-layer scheduling to reserve the resources and transfers the RESV message upstream. If not, the respective router R21, IR3, IR1, R11 sends an Reservation-request error message downstream. This procedure is repeated until the RESV message reaches the source node, thereby completing the resource reservation.

This typical RSVP procedure may be carried out, if there were no probable tunnel end point, e.g., if there were no router R21 understanding the tunnel-request object. In the first example explained above however, the routers R11 and R21 may serve as tunnel end points. In continuation of the first example, the terminal T21 responds to the signaling message S1 with a second signaling message S2. The signaling message S2 may be, e.g., RESV message of the RSVP protocol. The message S2 contains reservation parameters needed to finally establish the connection C1. The reservation parameters include, e.g., the so-called flow spec and filter spec. The filter spec defines what packets in the flow should be used by the packet classifier. The flow spec is used in packet scheduler and its content depends on the service. The message S2 is to follow the exact reverse path of the (PATH) message S1, setting up reservations for one sender at every node.

The daemon DMR of the router R21 receives the message S2. From the tunnel-request-object that has been removed from the signaling message S1' the router R21 has already identified itself as an probable tunnel destination point for the probable tunnel source point represented by the router R11. Thus the router R21 generates a tunnel-answer-object as a response to the tunnel-request-object. The tunnel-answer-object contains an address information of the router R21, presently its IP address. Further information may also be contained in the tunnel-answer-object, for example an identifier of a flow that shall be transmitted via the connection C1. The flow identifier may contain, e.g., the IP addresses of the terminals T11, T21 (= source and destination of the flow), port destination address and the like. The additional information may be obtained from the first signaling message S1', that is presently a PATH message.

The router R21 may basically insert the tunnel-answer-object into the message S2, that is a RESV message. Presently, however, the daemon DMR of the router R21 intercepts the message S2 and generates a new signaling message S3 for carrying the tunnel-answer-object. The signaling message S3 is, e.g., PATHerror message and replaces the message S2. The routers R21, IR3 and IR1 along the path P1 forward the signaling message S3 to the router R11.

The router R11 intercepts the signaling message S3 and responds to it with a signaling message S4, e.g., a PATHTeardown message, thereby releasing the section of path P1 between the router R11 and R21. The signaling message S4 is intercepted by the router R21.

It has to be noted, that the path section between the router R11 and R21 would also have been automatically released without any TEARDOWN-message if no refresh message is sent, i.e., no PATH messages are periodically sent.

Further, the router R11 establishes a tunnel TU1, for example an IP (Internet Protocol) tunnel, to the router R21, preferably using the path P1. The routers R11, R21 use preferably conventional RSVP messages to establish the tunnel TU1, e.g., a PATH and a RESV message downstream (R11 to R21) and upstream (R21 to R11) respectively. Finally, the router R11 sends a signaling message S5 to the terminal T11. The signaling message S5 indicates, that the connection C1 is completed. The signaling message S5 may be a RESV message. Then the terminal T11 starts to send a data flow to the terminal T21 via the connection C1. The router R11 maps the data flow into the tunnel TU1. The IP tunnel TU1 is a section of the connection C1 where data packets sent by terminal T11 are encapsulated into IP packets. The IP packets may contain at least an IP header with the IP address of the router R11 and the IP address of the router R21 (= start point and an end point of the IP tunnel TU1). The router R21, the end point of the tunnel TU1, removes the IP header and forwards the data packets sent by terminal T11 to the terminal T21.

Other encapsulation methods instead of IP encapsulation may also be used, e.g., GRE (Generic Routing Encapsulation) or MPLS (Multiprotocol Label Switching).

If in a modification of the above first example the signaling message S3 is encapsulated (tunneled) in, e.g., am IP packet, the path section between the router R11 and R21 is not established and has consequently not to be released by the signaling message S4. The path section between the router R11 and R21 would have also been not established if the signaling message S3 has a protocol ID, that is ignored by the communication devices along said path section, e.g., by the routers IR3, IR1.

In second example a connection C2 from the terminal T12 to the terminal T22 shall be established. The terminal T12 sends a first signaling message S6, e.g., a PATH message, to the router R11. The router R11 may aggregate packets to be sent via the connection C2 into the tunnel TU1. Thus, the router R11 inserts a tunnel-request-object containing its IP address into the signaling message S6. The message S6 is forwarded downstream from the router R11 via the routers IR1, IR3 to the router R21, e.g., using tunnel TU1. As explained above, the router R21 removes the tunnel-request-object from the message S6 and forwards it to the terminal T22.

The router R21 immediately responds to the message S6 with a second signaling message S7 containing a tunnel-answer-object as explained above (the answer message S7 could however be postponed until the terminal T22 responds to the message S6). The message S7 is, e.g., a RESV message. The message S7 is forwarded, e.g., via the tunnel TU1 to the router R11. The router R11 intercepts the message S7 and identifies the router R21 as tunnel end point by means of the tunnel-answer-object.

The signaling messages S6 and S7 are preferentially used by the routers R11 and R21 respectively to increase the bandwidth of the tunnel TU1.

The terminal T22 responds to the message S6 received from the router R21 with a signaling message S8, e.g., a RESV message. The signaling message S8 is sent upstream via the routers R21, IR3, IR1, R11 to the terminal T12 thereby establishing the connection C2.

It is however possible, that the router R21 intercepts the signaling message S8. Instead of the intercepted signaling message S8, that may however be expected by the terminal T12 to complete the connection C2, the router R11 may send a signaling message S8' to the terminal T12.

Subsequently, the terminal T12 sends data packets to the terminal T22 via the connection C2. The router R11 forwards the data packets via the tunnel TU1 to the router R21 which in turn forwards the data packets to the terminal T22. Thus, the connections C1 and C2 are aggregated using the tunnel TU1. The router R11 carries thereby an aggregator function and the router R21 a de-aggregator function out.

If, for example due to a reservation made because of the messages S6 and S8, a segment C2' of the connection C2 parallel to the tunnel TU1 is established, the connection segment C2' may be 'passively' released by not sending the necessary refresh messages or 'actively' released by one of the routers R11 or R21, e.g., that sends an appropriate TEARDOWN message.

In a third example it will be explained a) that a host, e.g., terminal T31, may be identified as a tunnel end point by the inventive method and b) that a new signaling message may be used, the signaling message being ignored by communication devices that are not able to serve as probable a tunnel end points, e.g., the routers IR2 and IR3.

In the third example, a connection C3 shall be established from the terminal T22 to the terminal T31. As the terminal T31 does not belong to the domain of the terminal T22, the network NW2, the terminal T22 sends a first signaling message S9 to the router R21. The message S9 instructs the router R21 to establish the connection C3 and is, e.g., a PATH message. The router R21 intends to establish a tunnel TU2 to the network NW3 via the network INW. However, the router R21 'supposes' that there is a probable tunnel end point available at the network NW3. Thus, the router R21 does not insert a tunnel-request-object into the message S9, as explained above. Instead, the router R21 intercepts the message S9 and sends a new signaling message S10 addressed to the terminal T31. The message S10 identifies the router R21 as a probable tunnel source point and is a request for establishing a tunnel connection. The message S10 may be similar to a PATH message in view of its contents, i.e., the message S10 contains an address information of the router R21, the probable tunnel source point. The message S10 shall be forwarded 'transparently' through the network INW, i.e., no resources for the planned connection C3 shall be reserved at the network INW due to the message S10. To this end, the message S10 may have a special identifier that is more or less ignored by the routers IR2, IR3.

The routers R21, IR2, IR3 forward the message S10 to the terminal T31 thereby not reserving resources for the connection C3. Nevertheless, the routers R21, IR2, IR3 may store already some path information of the planned connection C3. The terminal T31 responds the message S10 with a signaling message S11. The signaling message S11 may be similar to a RESV message but is presently also a message not intended to already reserve resources for the connection C3. The message S11 is tunnel-answer message identifying the terminal T31 as a probable tunnel end-point and containing an address information of the terminal T31, e.g. its IP address. The message S11 is forwarded upstream via the routers IR2, IR1 to the router R21 which intercepts the message S11. Based on the information of the message S11, the router R21 establishes the tunnel TU2 to the terminal T31. The router R21 and the terminal T31use preferentially conventional RSVP messages to establish the tunnel TU2, e.g., a PATH and a RESV message downstream (R21 to T31) and upstream (T31 to R21) respectively. However, any other suitable method may be used to establish the tunnel TU2. When the tunnel TU2 is established, the router R21 and the terminal T31 establish the connection C3 via the tunnel TU2. The router R21 completes the connection C3 by sending a signaling message S12 to the terminal T22. The message S12 may be, e.g., a RESV message.

Further connections between the terminal T31 and communication devices of the network NW2 may be aggregated into the tunnel TU2. For example, several applications, e.g., application programs run by the terminal T22, may use the tunnel TU2 to communicate with the terminal T31 and/or with applications run by the terminal T31. Furthermore, one or more connections between the terminal T21 and the terminal T31 may be established on the tunnel TU2.

If in a modification the of the above third example no device, e.g., router IR2 and terminal T31 and other devices not shown along the path of the connection C3 is capable of understanding the signaling message S10, i.e., its special identifier, no tunnel end point will be identified. Thus, the router R21 does not receive an answer to the signaling message S10. In this scenario, the router R21 and/or the terminal T22 may, after a predetermined time out period, establish the connection C3 in a conventional way using for example conventional PATH and RESV messages.

The inventive concept may also be applied to the identify end points for an intra-domain tunnel. For example a connection C4 between the terminals T11, T12 may be established on the network NW1, the connection C4 being preferably at least partly on a tunnel. To this end, the terminal sends a first signaling message S13 along a path P4 via the routers R12 and R13 (and possibly other communication devices not shown in the figure) to the terminal T12. The signaling message S13 is, e.g., a PATH message.

Presently, the router R12 may serve as a tunnel source point and the router R13 as a tunnel destination point. In order to identify a probable tunnel destination point the router R13 intercepts the message the signaling message S13 and modifies it. As explained above, the router R12 may send an explicit tunnel-request signaling message instead of the message S13 (e.g. with a proprietary message identifier). In the present case where it is unlikely that there is a probable tunnel destination point, the router inserts a tunnel-request object containing its IP address into the message S13 and forwards it to the router R13. The router R13 in turn, responds with a signaling message S14, for example a RESV message, containing a tunnel-answer object and the IP address of the router R13. The message S14, i.e. the tunnel-answer object, may contain further information, e.g., a port number of the transport layer or the like. Based on the messages S13, S14, the router R12 and/or the router R13 establish a tunnel TU3. By sending appropriate signaling messages to the terminals T11, T12, the router R12 and/or the router R13 complete the connection C4 between the terminals T11, T12 via the tunnel TU3.

If however, in contrast to the proceeding above, the router R13 fails to respond to the message S13 with a message carrying a tunnel-answer-object, in other words, if there were no possible tunnel destination point on the path P4, the connection C4 would have been established in a conventional way along the path P4. In this scenario, the terminal T12 would respond to the message S13 with a signaling message, e.g., a RESV message. This message would have been forwarded upstream along the path P4. After receiving the RESV message each router R13, R12 determines whether it has sufficient capacity for this resource reservation. If so, the respective router R13, R12 performs network-layer scheduling to reserve the resources and transfers the RESV message upstream, thereby completing the resource reservation for the 'conventional' connection.

For simplification the terminals T11 - T13, T21, T22, T31 and T32 and the routers R11-R13, R21 are of similar design and only diagrammatically depicted as block diagrams of functions. Figure 3 shows, e.g., a block diagram for a communication device CD that may be both the terminal T11 and the router R11. The communication device CD possesses connecting means TR for the transmission and reception of data, e.g., via networks INW, NW1. The connecting means TR for example may comprise Ethernet boards, modems, ISDN (integrated services digital network) adapters or wireless interface modules. Furthermore the communication device CD possesses control means CPU and memory means MEM which are connected with each other and with the connecting means TR by connections, which are not illustrated. The control means CPU are for example processors or processor arrays with which a program code of program modules may be executed, which are stored in memory means MEM, for example program code of the RSVP daemons DMR or DMT or program code of the admission control modules ADT, ADR. The memory means MEM are for instance in the form of fixed disks or RAM modules. Furthermore the communication device CD may have display means as for example LCD's (liquid crystal displays) and input means, for example a keyboard and/or a computer mouse. Further components which are not illustrated are speakers and microphones for voice input and output. The communication device CD is run by an operating system as for instance Unix.

The communication device CD may represent for example the router R11 or the router R21. As shown in figure 2 the respective router may contain a RSVP daemon DMR. The daemon DMR is presently a first program module for setting up the tunnel connection TU1 with a second communication device represented by the router R21. The RSVP daemon DMR contains program code able to be executed by the control means CPU. The daemon DMR is able to send the first signaling message S1'. To this end the daemon DMR generates the message S1' and instructs the connecting means TR to forward the message S1' in the direction of the terminal T21 and the router R21 via the network INW.

When the connecting means TR receive the second signaling message S3 sent by the router R21, the connecting means TR forward the message S3 to the daemon DMR. The daemon DMR analyses the message S3 and identifies thereby the router R21 as a probable destination point of the tunnel TU1.

The daemon DMR of the router R21 and/or the daemon DMR of the router R11 may be, e.g., second program module according to the invention. The daemon DMR installed in the router R21 is able to receive the message containing an address information the router R11 and tunnel-request-object identifying the router R11 as a probable source point of the tunnel TU1. Accordingly, the daemon DMR sends the message S3 containing the response to the tunnel-request-object, the response identifying the router R21 as a probable destination the tunnel TU1.

Although the foregoing invention has been described in some detail for purposes of clarity of understanding, it will be apparent that certain changes and modifications may be practiced within the scope of the invention.

The inventive functions described above in connection with the daemons DMR, DMT may also be provided at least partly by other components, both hardware or software components, of the routers and terminals respectively. For example the respective admission control ADT, ADR may be involved when it is checked whether the node has sufficient available resources to supply the requested QoS, i.e., whether the node is able to establish a tunnel connection.

## Claims

1. A method for setting up a tunnel connection (TU1; TU2; TU3) between a first and a second communication device (R11, R21; R21, T31; R12, R13) both being connected via at least one first communication network (INW, NW1), said at least one first communication network (INW, NW1) being a routed network able to reserve a Quality of Service for said tunnel (TU1; TU2; TU3); said tunnel being intended to carry an aggregate of data flows, the method comprising the steps of:
- transmission of a first signaling message (S1'; S10; S13) of a resource reservation protocol by said first communication device (R11; R21; R12) to said second communication device (R21; T31; R13) via said at least one first communication network (INW, NW1), said first signaling message (S1'; S10; S13) containing an address information of said first communication device (R11; R21; R12) and a request for a tunnel connection (TU1; TU2; TU3), said request identifying said first communication device (R11; R21; R12) as a probable source point of said tunnel, and
- sending by said second communication device (R21; T31; R13) a second signaling message (S3; S11; S13) using said resource reservation protocol to said first communication device (R11; R21; R12), said second signaling message (S3; S11; S13) containing a response to said request for a tunnel connection (TU1; TU2; TU3) and further containing an address information of said second communication device (R21; T31; R13), said response identifying said second communication device (R21; T31; R13) as a probable destination point of said tunnel (TU1; TU2; TU3).

2. The method as claimed in claim 1, **characterized in that** said first signaling message (S1'; S10; S13) is forwarded by intermediate routers (IR1, IR3) of said at least one first communication network (INW, NW1), said intermediate routers (IR1, IR3) ignoring said request for a tunnel connection (TU1; TU2; TU3) and/or **in that** said second signaling message (S3; S11; S13) is forwarded by said intermediate routers (IR1, IR3) of said at least one first communication network (INW, NW1), said intermediate routers (IR1, IR3) ignoring said response to said request for a tunnel connection (TU1; TU2; TU3).

3. The method as claimed in claim 1, **characterized in that** said first signaling message (S1'; S10; S13) is a PATH-Message of said resource reservation protocol.

4. The method as claimed in claim 1, **characterized in that** said second signaling message (S3; S11; S13) is a RESV-message or a PATHerror-message or a RESVtear-message of said resource reservation protocol.

5. The method as claimed in claim 1, **characterized in that** said request for a tunnel connection (TU1; TU2; TU3) and/or said response to said request for a tunnel connection are objects contained in said first signaling message (S1'; S10; S13) and said second signaling message (S3; S11; S13) respectively.

6. The method as claimed in claim 1, **characterized in that** said first communication device (R11; R21; R12) or said second communication device (R21; T31; R13) establishes said tunnel connection (TU1; TU2; TU3) using said address information of said second communication device or said address information of said first communication device respectively.

7. The method as claimed in claim 6, **characterized in that** said second communication device (R21; T31; R13) establishes said tunnel connection (TU1; TU2; TU3) using said second signaling message (S3; S11; S13).

8. The method as claimed in claim 1, **characterized in that** it is carried out in connection with establishing a connection for a data flow through said at least one first communication network (INW, NW1).

9. The method as claimed in claim 8 **characterized in that** said first signaling message (S1'; S10; S13) and/or said second signaling message (S3; S11; S13) are used to establish said connection for said data flow, said connection being established separate from said tunnel (TU1; TU2; TU3).

10. The method as claimed in claim 8, **characterized in that** after establishment of said tunnel (TU1; TU2; TU3) said data flow is transmitted via said tunnel (TU1; TU2; TU3), and **in that** said connection being separate from said tunnel (TU1; TU2; TU3) is released in particular by a release signaling message of said resource reservation protocol, said release signaling message being sent by said first communication device (R11; R21; R12) and/or said second communication device (R21; T31; R13).

11. The method as claimed in claim 1, **characterized in that** said first communication device (R11; R21; R12) is a router serving at least one first host (T11, T12) and/or said second communication device (R21; T31; R13) is a router serving at least one second host (T21, T22).

12. The method as claimed in claim 11, **characterized in that** said at least one first host (T11, T12) and said first communication device (R11; R21; R12) respectively are members of a first domain (NW1) and/or said at least one second host (T21, T22) and said second communication device (R21; T31; R13) respectively are members of a second domain (NW2).

13. The method as claimed in claim 1, **characterized in that** said at least one first communication network (INW, NW1) provides integrated services.

14. The method as claimed in claim 1, **characterized in that** said first signaling message (S1'; S10; S13) and/or said second signaling message (S3; S11; S13) comprise an identifier that is ignored by intermediate routers (IR1, IR3) forwarding the respective first or second message and/or **characterized in that** said first signaling message (S1'; S10; S13) and/or said second signaling message (S3; S11; S13) are forwarded via a tunnel connection, in particular a Internet Protocol (IP) tunnel connection, a Multiprotocol Label Switching (MPLS) tunnel connection or a Generic Routing Encapsulation (GRE) tunnel connection, between said first communication device (R11; R21; R12) and said second communication device (R21; T31; R13).

15. The method as claimed in claim 1, **characterized in that** after a predetermined timeout period said first communication device (R11; R21; R12) and/or said second communication device (R21; T31; R13) establish a connection separate from said tunnel connection (TU1; TU2; TU3) if said first signaling message (S1'; S10; S13) and said second signaling message (S3; S11; S13) respectively are not responded by said second communication device (R21; T31; R13) or said first communication device (R11; R21; R12) respectively.

16. A first communication device (R11; R21; R12) for setting up a tunnel connection (TU1; TU2; TU3) to a second communication device (R21; T31; R13) being connected via at least one first communication network (INW, NW1), said first communication device (R11; R21; R12) being connectable to said at least one first communication network (INW, NW1), said at least one first communication network (INW, NW1) being a routed network able to reserve a Quality of Service for said tunnel (TU1; TU2; TU3); said tunnel (TU1; TU2; TU3) being intended to carry an aggregate of data flows, said first communication device (R11; R21; R12) comprising means for carrying out the steps of:
- sending of a first signaling message (S1'; S10; S13) of a resource reservation protocol to said second communication device (R21; T31; R13) via said at least one first communication network (INW, NW1), said first signaling message (S1'; S10; S13) containing an address information of said first communication device (R11; R21; R12) and a request for a tunnel connection (TU1; TU2; TU3), said request identifying said first communication device (R11; R21; R12) as a probable source point of said tunnel (TU1; TU2; TU3), and
- receiving a second signaling message (S3; S11; S13) using said resource reservation protocol sent by said second communication device (R21; T31; R13) to said first communication device (R11; R21; R12), said second signaling message (S3; S11; S13) containing a response to said request for a tunnel connection (TU1; TU2; TU3) and further containing an address information of said second communication device (R21; T31; R13), said response identifying said second communication device (R21; T31; R13) as a probable destination point of said tunnel (TU1; TU2; TU3).

17. A second communication device (R21; T31; R13) for setting up a tunnel connection (TU1; TU2; TU3) to a first communication device (R11; R21; R12) being connected via at least one first communication network (INW, NW1), said second communication device (R21; T31; R13) being connectable to said at least one first communication network (INW, NW1), said at least one first communication network (INW, NW1) being a routed network able to reserve a Quality of Service for said tunnel (TU1; TU2; TU3); said tunnel (TU1; TU2; TU3) being intended to carry an aggregate of data flows, said second communication device (R21; T31; R13) comprising means for carrying out the steps of:
- receiving of a first signaling message (S1'; S10; S13) of a resource reservation protocol from said first communication device (R11; R21; R12) via said at least one first communication network (INW, NW1), said first signaling message (S1'; S10; S13) containing an address information of said first communication device (R11; R21; R12) and a request for a tunnel connection (TU1; TU2; TU3), said request identifying said first communication device (R11; R21; R12) as a probable source point of said tunnel (TU1; TU2; TU3), and
- sending of a second signaling message (S3; S11; S13) using said resource reservation protocol to said first communication device (R11; R21; R12), said second signaling message (S3; S11; S13) containing a response to said request for a tunnel connection (TU1; TU2; TU3) and further containing an address information of said second communication device (R21; T31; R13), said response identifying said second communication device (R21; T31; R13) as a probable destination point of said tunnel (TU1; TU2; TU3).

18. A first program module for a first communication device (R11; R21; R12) for setting up a tunnel connection (TU1; TU2; TU3) to a second communication device (R21; T31; R13) being connected via at least one first communication network (INW, NW1), said first communication device (R11; R21; R12) being connectable to said at least one first communication network (INW, NW1), said at least one first communication network (INW, NW1) being a routed network able to reserve a Quality of Service for said tunnel (TU1; TU2; TU3); said tunnel (TU1; TU2; TU3) being intended to carry an aggregate of data flows, said first program module containing program code able to be executed by a control means of said first communication device (R11; R21; R12) and said first program module making said first communication device (R11; R21; R12) carrying out the steps of:
- sending of a first signaling message (S1'; S10; S13) of a resource reservation protocol to said second communication device (R21; T31; R13) via said at least one first communication network (INW, NW1), said first signaling message (S1'; S10; S13) containing an address information of said first communication device (R11; R21; R12) and a request for a tunnel connection (TU1; TU2; TU3), said request identifying said first communication device (R11; R21; R12) as a probable source point of said tunnel (TU1; TU2; TU3), and
- receiving a second signaling message (S3; S11; S13) using said resource reservation protocol sent by said second communication device (R21; T31; R13) to said first communication device (R11; R21; R12), said second signaling message (S3; S11; S13) containing a response to said request for a tunnel connection (TU1; TU2; TU3) and further containing an address information of said second communication device (R21; T31; R13), said response identifying said second communication device (R21; T31; R13) as a probable destination point of said tunnel (TU1; TU2; TU3).

19. A second program module for a second communication device (R21; T31; R13) for setting up a tunnel connection (TU1; TU2; TU3) to a first communication device (R11; R21; R12) being connected via at least one first communication network (INW, NW1), said second communication device (R21; T31; R13) being connectable to said at least one first communication network (INW, NW1), said at least one first communication network (INW, NW1) being a routed network able to reserve a Quality of Service for said tunnel (TU1; TU2; TU3); said tunnel (TU1; TU2; TU3) being intended to carry an aggregate of data flows, said second program module containing program code able to be executed by a control means of said second communication device (R21; T31; R13) and said second program module making said second communication device (R21; T31; R13) carrying out the steps of:
- receiving of a first signaling message (S1'; S10; S13) of a resource reservation protocol from said first communication device (R11; R21; R12) via said at least one first communication network (INW, NW1), said first signaling message (S1'; S10; S13) containing an address information of said first communication device (R11; R21; R12) and a request for a tunnel connection (TU1; TU2; TU3), said request identifying said first communication device (R11; R21; R12) as a probable source point of said tunnel (TU1; TU2; TU3), and
- sending of a second signaling message (S3; S11; S13) using said resource reservation protocol to said first communication device (R11; R21; R12), said second signaling message (S3; S11; S13) containing a response to said request for a tunnel connection (TU1; TU2; TU3) and further containing an address information of said second communication device (R21; T31; R13), said response identifying said second communication device (R21; T31; R13) as a probable destination point of said tunnel (TU1; TU2; TU3).

20. A program storage device, in particular a computer diskette, a digital versatile disc or a hard disk, having a first program module as claimed in claim 18 recorded thereon and/or having a second program module as claimed in claim 19 recorded thereon.
